# EUROPEAN PATENT APPLICATION

(11) **EP 4 030 543 A1**
(43) Date of publication of application: **20.07.2022**
(21) Application number: 21218278.6
(22) Date of filing: 30.12.2021
(51) Int. Cl.: H01M 50/209, H01M 10/04, H01M 50/20

(54) **APPARATUS AND METHOD FOR MANUFACTURING SECONDARY BATTERY**

(30) Priority: 14.01.2021 KR 20210005560
(71) Applicant: LG ELECTRONICS INC., Yeongdeungpo-Gu Seoul 07336 (KR)
(72) Inventor: KWON, Dooyoung, 06772 Seoul (KR); AHN, Dugyool, 06772 Seoul (KR); YI, Changheon, 06772 Seoul (KR); GONG, Byeongseop, 06772 Seoul (KR); JUN, Ilsu, 06772 Seoul (KR); PARK, Hyojeong, 06772 Seoul (KR)
(74) Representative: Vossius & Partner Patentanwälte Rechtsanwälte mbB

(57) **Abstract**

Provided is an apparatus for manufacturing a secondary battery. The apparatus for manufacturing the secondary battery includes a housing, in which a secondary battery unit including a cell module, a mono frame, into which the cell module is accommodated, and an end plate coupled to both opened side surfaces of the mono frame is accommodated, a pair of rotation shafts extending from both side surfaces of the housing, a housing rotation unit connected to any one of the pair of rotation shafts, a housing support configured to support the pair of rotation shafts, and a support unit provided inside the housing rotation unit to press and support the secondary battery unit.

## Description

### CROSS-REFERENCE TO RELATED APPLICATIONS

The present application claims priority to Korean Patent Application No. 2021-0005560 filed on January 14, 2021.

### BACKGROUND

The present disclosure relates to an apparatus and method for manufacturing a secondary battery.

A main process for manufacturing a secondary battery may include a cell stacking process of stacking a plurality of cells to manufacture one module, a bus bar assembly process of electrically connecting copper to aluminum, a lead welding process of performing welding by using a laser to fix copper and aluminum to a bus bar, a module insertion process of inserting the module into a hexahedral mono frame to protect the module, and an end plate welding of sealing the mono frame using the laser so that foreign substances are not introduced into the module.

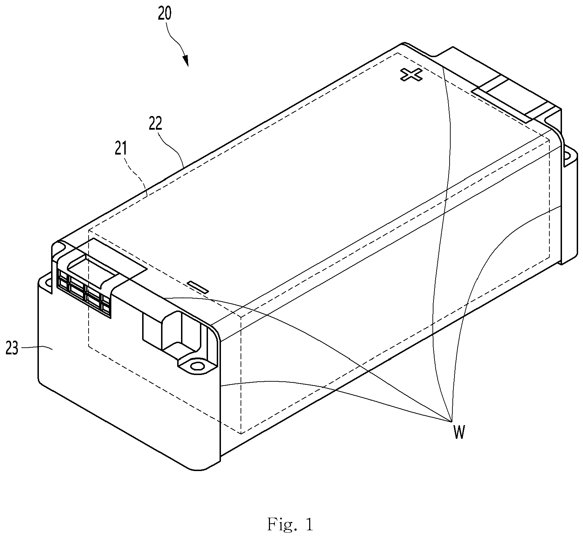

Fig. 1 is a perspective view illustrating an outer appearance of a secondary battery unit into which a cell module is inserted into a mono frame.

Referring to FIG. 1, a cell module 21 on which in a lead welding process is performed has both opened side surfaces and is inserted into a hexahedral mono frame 22 having an opened inside. The cell module 21 may be understood to mean a secondary battery in which a positive electrode lead and a negative electrode lead are attached to both ends of each of a plurality of stacked cells.

In addition, in a state in which the cell module is inserted into the mono frame 22, both opened side surfaces of the mono frame 22 are shielded by a rectangular plate that is called an end plate 23.

Also, an edge of the end plate 23 and an edge portion of the mono frame 22, that is, a contact portion W between the end plate 23 and the mono frame 22 is welded using a laser. A secondary battery product, in which the welding process is completed, may be defined as a secondary battery unit 20.

When a material called a battery management system (BMS) is attached to the secondary battery unit 20, the secondary battery product may be defined as a battery pack or a secondary battery pack. That is, the secondary battery unit 20 may be understood as a product before the BMS is attached.

A welding device used to weld the end plate 23 to both side surfaces of the mono frame 22 performs welding while the end plate 23 is fitted into both ends of the mono frame 22. Furthermore, a jig or clamp member constituting the welding device welds four edges of the end plate while rotating in a state of holding only the end plate 23.

As a result, when the end plate 23 rotates to weld one edge and the other side of the end plate, a phenomenon in which a position of the end plate is shifted may occur.

In detail, if rotational rates of the pair of clamp members for respectively rotating the end plates 23 that are in close contact with both side surfaces of the mono frame 22 are not exactly the same, the mono frame 22 may be twisted to allow an adhesive surface to be spread or changed in position.

As described above, when the positional shift phenomenon occurs, the welding may not be properly performed to cause a welding defect. As a result, there is a limitation in that sealing inside the secondary battery unit 20 is not reliably performed.

### SUMMARY

The present invention has been proposed to improve the above-described limitations. The invention is defined in the claims.

In one embodiment, an apparatus for manufacturing a secondary battery includes: a housing, in which a secondary battery unit including a cell module, a mono frame, into which the cell module is accommodated, and an end plate coupled to both opened side surfaces of the mono frame is accommodated; a pair of rotation shafts extending from both side surfaces of the housing; a housing rotation unit connected to any one of the pair of rotation shafts; a housing support configured to support the pair of rotation shafts; and a support unit provided inside the housing rotation unit to press and support the secondary battery unit.

In another embodiment, a method for manufacturing a secondary battery includes: a first process of accommodating a secondary battery unit, which includes a cell module, a mono frame, into which the cell module is accommodated, and an end plate coupled to both opened side surfaces of the mono frame, into a housing; a second process of operating an end plate support unit to fix and support the mono frame and the end plate; and a third process of rotating the housing at an angle of about 90 degrees or about 180 degrees to weld a welding portion formed on a contact portion between the end plate and the mono frame.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view illustrating an outer appearance of a secondary battery unit into which a cell module is inserted into a mono frame.
Fig. 2 is a perspective view illustrating an outer appearance of an overall configuration of an end plate welding device constituting an apparatus for manufacturing a secondary battery.
Fig. 3 is a perspective view illustrating an upper cylinder of a top surface pressing portion constituting the end plate welding device.
Figs. 4 and 5 are perspective views of an end plate pressing portion constituting the end plate welding device.
Figs. 6 and 7 are perspective views of a side surface pressing portion constituting the end plate welding device.
Fig. 8 is a flowchart illustrating a process of welding an end plate during a method for manufacturing a secondary battery according to an embodiment.

### DETAILED DESCRIPTION OF THE EMBODIMENTS

Hereinafter, an apparatus and method for manufacturing a secondary battery according to an embodiment will be described with reference to the drawings.

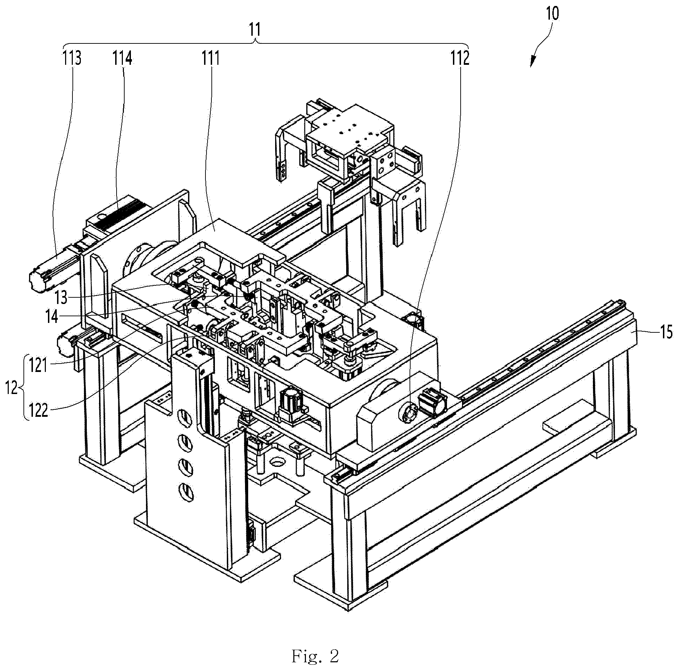

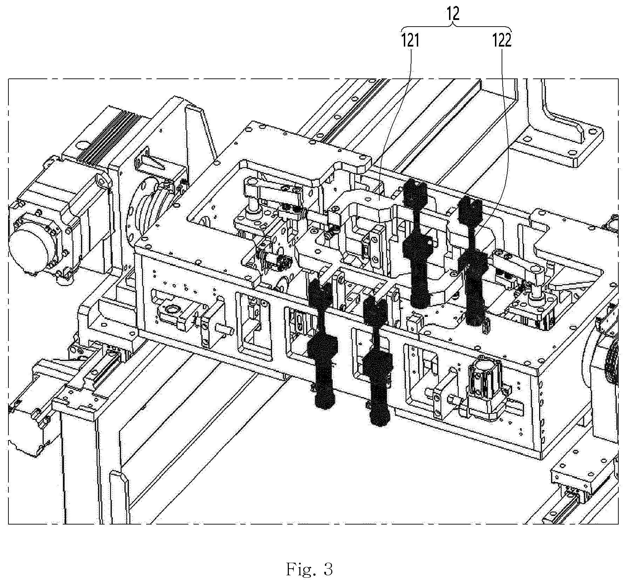

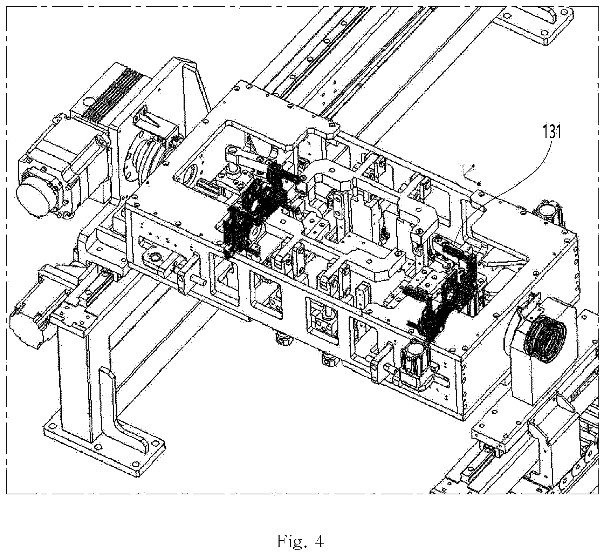

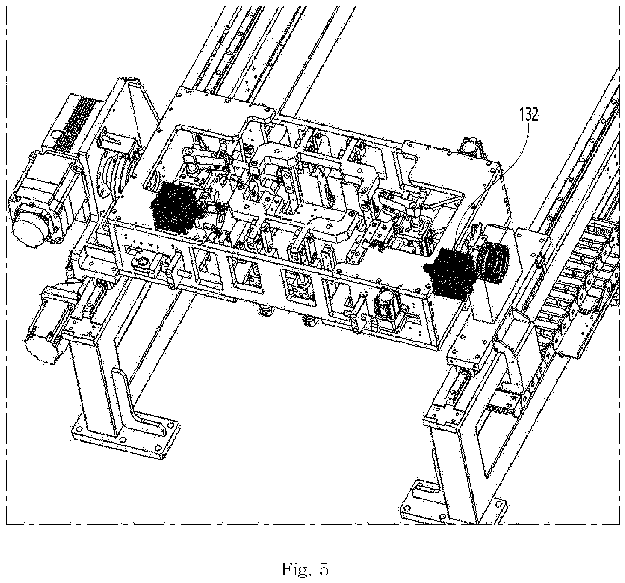

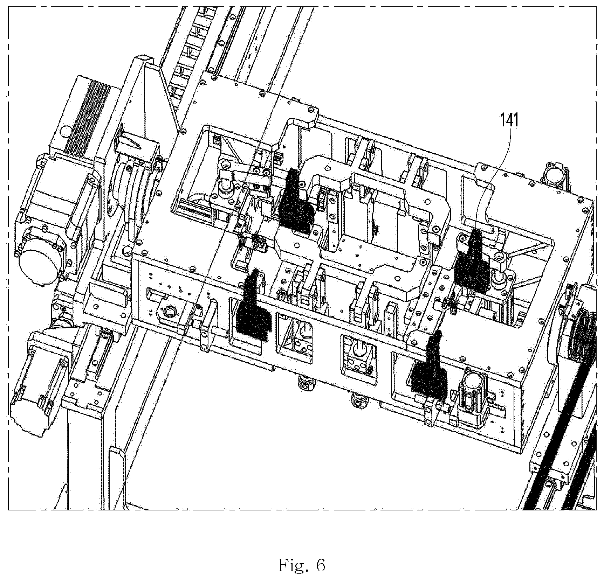

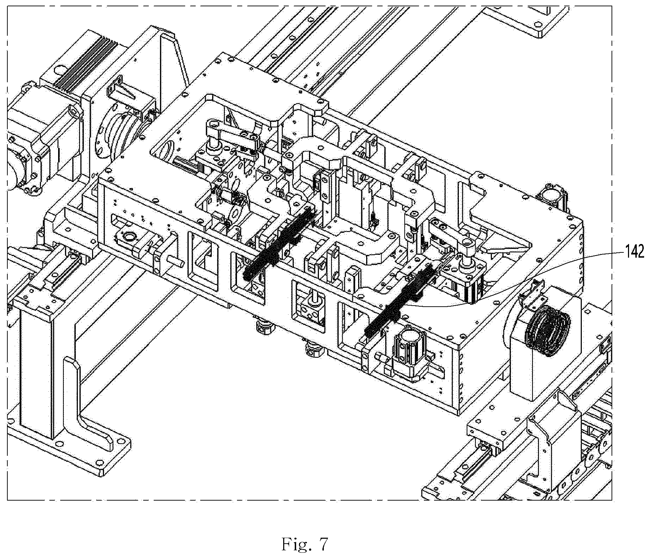

Fig. 2 is a perspective view illustrating an outer appearance of an overall configuration of an end plate welding device constituting an apparatus for manufacturing a secondary battery, Fig. 3 is a perspective view illustrating an upper cylinder of a top surface pressing portion constituting the end plate welding device, Figs. 4 and 5 are perspective views of an end plate pressing portion constituting the end plate welding device, and Figs. 6 and 7 are perspective views of a side surface pressing portion constituting the end plate welding device.

Referring to Figs. 2 to 7, an end plate welding device 10 constituting an apparatus for manufacturing a secondary battery according to an embodiment may be understood as a device configured to weld and couple an end plate to both side surfaces of a mono frame, in which a cell module is accommodated.

In detail, the end plate welding device 10 may include a module rotation unit 11.

The module rotation unit 11 may include a housing 111 accommodating an assembly of a mono frame 22 and an end plate 23 before welding, a pair of rotation shafts 112 provided on both side surfaces of the housing 111, a servo motor 113 coupled to any one of the pair of rotation shafts 112, and a reducer 114 disposed between the servo motor 113 and the rotation shaft 112.

The servo motor 113 and the reducer 114 may be defined as housing rotation units.

The housing 111 may be constituted by a bottom portion, a top surface portion, a front portion, a rear portion, a left surface portion, and a right surface portion.

The servo motor 113 and the speed reducer 114 may be connected to the rotation shaft 112 extending from any one of the left surface portion and the right surface portion of the housing 111.

The reducer 114 may be a unit that reduces rotational force of the servo motor 113 and may include a hollow type reducer. As the hollow type reducer 114 is applied, there is no backlash, and thus, the rotational position is constant.

In addition, it should be noted that other types of motors other than the servo motor 113 may also be applied.

The end plate welding device 10 may further include a housing support 15 supporting the pair of rotation shafts 112. The rotation shaft 112 is capable of linearly reciprocating on a horizontal plane along a top surface of the housing 15.

The end plate welding device 10 may further include a top surface pressing portion 12.

The top surface pressing portion 12 may include a pair of upper pushers 121, which are respectively disposed on upper portions of a front end and a rear end of the housing 111 in the drawing, and an upper cylinder 122 that rotates the upper pushers 121.

Each of the pair of upper pushers 121 is rotatable at an angle of about 90 degrees or less in a horizontal state by an operation of the upper cylinder 122. Thus, in the state in which the mono frame 22 is accommodated in the housing 111, the pair of upper pushers 121 press the top surface of the mono frame 22 to prevent the mono frame 22 from being shaken.

The pair of upper cylinders 122 are coupled to the inside of the housing 111 to rotate together with the housing 111.

The end plate welding device 10 may further include an end plate pressing portion 13.

In detail, before the end plate 23 is welded to the mono frame 22, the end plate 23 is fitted into both side surfaces of the mono frame 22 and accommodated inside the housing 111 while being maintained in coupling force so as not be separated from both the side surfaces of the mono frame 22.

The end plate pressing portion 13 performs a function of supporting the end plate 23 so as not to be separated from the mono frame 22.

The end plate pressing portion 13 includes a module clamp 131 moving in a direction perpendicular to the end plate 23 and a module clamp driving cylinder 132 that linearly reciprocates the module clamp 132.

The module clamp driving cylinder 132 is coupled to left and right sides of the housing 111 and linearly moves the module clamp 131 in a direction closer to and away from the end plate 23.

The module clamp 131 is moved a predetermined distance from both sides of the mono frame 22 toward a center of the mono frame 22 so that the end plate 23 is stably coupled to both the side surface of the mono frame 22.

In addition, a stopper is provided to restrict a distance by which the module clamp 131 is moved in the central direction of the mono frame 22 to support the end plate 23 to prevent the cell module 21 accommodated inside the mono frame 22 from being changed in position. That is, there is an advantage that the cell module 21 is not eccentric by being pushed to either side inside the mono frame 22.

In addition, the end plate welding device 10 may further include a side surface pressing portion 14.

The side surface pressing portion 14 includes a pair of side clamps 141 that presses and supports the front and rear surfaces of the mono frame 22 and a pair of side clamp driving cylinder that drives the pair of side clamps 141.

When the side clamp driving cylinder 142 operates, the pair of side clamps 141 are in close contact with the front and rear surfaces of the mono frame 22, respectively, to prevent the mono frame 22 from being shaken.

Hereinafter, an end plate welding method performed in the end plate welding device 10 will be described. The welding method will be described by limiting that laser welding is applied.

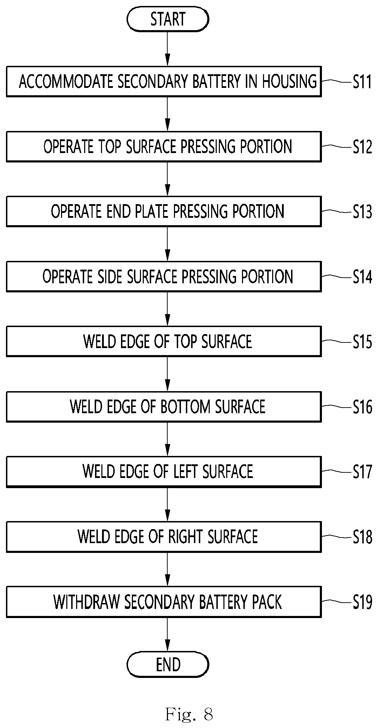

Fig. 8 is a flowchart illustrating a process of welding an end plate during a method for manufacturing a secondary battery according to an embodiment.

Referring to Fig. 8, first, a secondary battery unit including a mono frame 22, in which a cell module 21 is accommodated, and an end plate 23 temporarily fixed to each of both side surfaces of the mono frame 22 are accommodated in a housing 111 of the end plate welding device (S11).

In this state, a top surface pressing portion 12 operates to press a top surface of the mono frame 22 (S12). That is, an upper cylinder 122 operates to rotate an upper pusher 121, and the upper pusher 121 rotates in a horizontal state to press front and rear ends of the top surface of the mono frame 22.

Then, the end plate pressing portion 13 operates to press and support the end plate 23. That is, a module clamp driving cylinder 132 operates so that the end plate 23, on which the module clamp 131 is erected in a vertical state, is maintained in a state of being coupled to both the side surfaces of the mono frame 22. Then, a contact portion between the end plate 23 and the mono frame 22, i.e., a welded portion is prevented from being separated or twisted.

Then, the side surface pressing portion operates to press front and rear surfaces of the mono frame 22 (S14). That is, the side clamp driving cylinder 142 operates so that the side clamp 141 presses and supports the front and rear surfaces of the mono frame 22.

When all of the above processes are performed, the mono frame 22 and the end plate 23 may be maintained in a fixed state without being shaken within the housing 111, and also, the housing 111, the mono frame 22, and the end plate 23 may rotate as one body.

Here, an order of operation of the top surface pressing portion 12, the end plate pressing portion 13, and the side surface pressing portion 14 is not limited to the above sequence.

When an assembly of the cell module 21, the mono frame 22, and the end plate 23, i.e., the secondary battery unit is fixed in the housing 111, an edge of the top surface of the mono frame 22 is welded (S15). In detail, a laser welding machine welds a welding portion at one side of the left and right edges of the top surface of the mono frame 22 and then welds a welding portion at the other side.

When the welding of the top surface is finished, the module rotation unit 11 operates to rotate the housing 111 at an angle of about 180 degrees and then performs welding of an edge of a bottom surface of the secondary battery unit (S16). That is, when a servo motor 113 and a reducer 114 operate so that the housing 111 rotates at a predetermined rate about a rotation shaft 112, the bottom surface of the secondary battery unit moves to an upper side.

In this state, the laser welding machine welds a welding portion at one side of the left and right edges of the bottom surface of the mono frame 22 and then welds a welding portion at the other side.

When the welding of the bottom surface is finished, the module rotation unit 11 operates to rotate the housing 111 at an angle of about 90 degrees so that an edge of the left surface (or an edge of the front surface) of the secondary battery unit is welded (S17).

When the welding of the left surface is finished, the module rotation unit 11 operates to rotate the housing 111 at an angle of about 180 degrees so that an edge of the left surface (or an edge of the front surface) of secondary battery unit is welded.

When the welding of the edge of the right surface is finished, the secondary battery unit is withdrawn to be transferred to a next manufacturing process (S19).

Here, it should be noted that the order of the welding from the edge of the top surface to the edge of the right surface is not limited to the above description sequence.

For example, after the welding of the edge of the top surface is finished, it may be possible to sequentially weld the front surface, the bottom surface, and the rear side in the order while the module rotation unit 11 rotates the housing 111 at an angle of about 90 degrees.

According to the apparatus and method for manufacturing the secondary battery according to the embodiment, since the housing that accommodates the secondary battery unit rotates in the state in which the six surfaces of the secondary battery unit are fixed and supported, the position of the cell module accommodated in the mono frame may be fixed.

In addition, since the housing rotates to prevent the mono frame from being twisted, the welding quality may be secured.

In addition, since the hollow type reducer is used, there may be no backlash, and thus, the rotational position may be constant.

## Claims

1. An apparatus for manufacturing a secondary battery, the apparatus comprising:
a housing, in which a secondary battery unit comprising a cell module, a mono frame, into which the cell module is accommodated, and an end plate coupled to both opened side surfaces of the mono frame is accommodated;
a pair of rotation shafts extending from both side surfaces of the housing;
a housing rotation unit connected to any one of the pair of rotation shafts;
a housing support configured to support the pair of rotation shafts; and
a support unit provided inside the housing rotation unit to press and support the secondary battery unit.

2. The apparatus according to claim 1, wherein the support unit comprises a pair of top surface pressing portions that are respectively provided at front and rear sides of the housing to press a top surface of the mono frame.

3. The apparatus according to claim 2, wherein each of the pair of top surface pressing portions comprises:
an upper cylinder; and
an upper pusher rotatably connected to the upper cylinder to press the top surface of the mono frame.

4. The apparatus according to claim 2, or 3, wherein the support unit comprises a pair of end plate pressing portions that are respectively provided at both sides of the housing to press and support the end plate.

5. The apparatus according to claim 4, wherein each of the pair of end plate pressing portions comprise:
a module clamp configured to press each of the pair of end plates; and
a module clamp driving cylinder configured to move the module clamp horizontally in a central direction of the mono frame.

6. The apparatus according to claim 4, or 5, wherein the support unit comprises a pair of top surface pressing portions that are respectively provided at front and rear sides of the housing to press and support front and rear surfaces of the mono frame.

7. The apparatus according to claim 6, wherein each of the pair of side surface pressing portion comprises:
a side clamp configured to press and support the front or rear surfaces of the mono frame; and
a side clamp driving cylinder configured to moves the side clamp horizontally in a central direction of the mono frame.

8. The apparatus according to claim 6, wherein the housing rotation unit comprises:
a servo motor; and
a reducer configured to connect the servo motor to the rotation shaft and reduce rotation force of the servo motor.

9. The apparatus according to claim 8, wherein the reducer comprises a hollow type reducer.

10. A method for manufacturing a secondary battery, the method comprising:
a first process of accommodating a secondary battery unit, which comprises a cell module, a mono frame, into which the cell module is accommodated, and an end plate coupled to both opened side surfaces of the mono frame, into a housing;
a second process of operating an end plate support unit to fix and support the mono frame and the end plate; and
a third process of rotating the housing at an angle of about 90 degrees or about 180 degrees to weld a welding portion formed on a contact portion between the end plate and the mono frame.

11. The method according to claim 10, wherein the second process comprises operating a top surface pressing portion configured to press a top surface of the mono frame, an end plate pressing portion configured to press the end plate, and a side surface pressing portion configured to press front and rear surfaces of the mono frame.

12. The method according to claim 11, wherein the top surface pressing portion, the end plate pressing portion, and the side surface pressing portion are operated at the same time or in order to support the mono frame and the end plate.

13. The method according to claim 11, or 12, wherein the third process comprises:
welding an edge of a top surface of the mono frame;
rotating the housing at an angle of about 180 degrees to weld an edge of a bottom surface of the mono frame;
rotating the housing at an angle of about 90 degrees to weld an edge of a front surface of the mono frame; and
rotating the housing at an angle of about 180 degrees to weld an edge of a rear surface of the mono frame.

14. The method according to claim 11, 12, or 13, wherein the third process comprises:
welding an edge of a top surface of the mono frame;
rotating the housing at an angle of about 90 degrees to weld an edge of a rear surface of the mono frame;
rotating the housing at an angle of about 90 degrees to weld an edge of a bottom surface of the mono frame; and
rotating the housing at an angle of about 90 degrees to weld an edge of a front surface of the mono frame.

15. The method according to claim 11, wherein the welding performed in the third process comprises laser welding.
